# FASCICULE DE BREVET EUROPEEN

(11) **EP 2 890 541 B1**
(45) Date de publication et mention de la délivrance du brevet: **05.10.2016**
(21) Numéro de dépôt: 13773283.0
(22) Date de dépôt: 14.08.2013
(51) Int. Cl.: B29B 11/16, B29C 70/46, B29C 70/22, B29K 307/04, B29C 53/04

(54) **DISPOSITIF ET PROCÉDÉ POUR LA RÉALISATION DE PRÉFORMES**
VORRICHTUNG UND VERFAHREN ZUR HERSTELLUNG VON VORFORMLINGEN
DEVICE AND METHOD FOR PRODUCING PREFORMS

(30) Priorité: 28.08.2012 FR 1258041
(43) Date de publication de la demande: 08.07.2015
(73) Titulaire: SNECMA, 75015 Paris (FR)
(72) Inventeur: MATHON, Richard, F-91800 Brunoy (FR); MAGNAUDEIX, Dominique, F-77550 Moissy-Crayamel Cedex (FR); SOUHAITE, Noémie, F-77550 Moissy-Crayamel Cedex (FR); MARCHAL, Yann, F-77550 Moissy-Crayamel Cedex (FR); GIMAT, Matthieu, Portsmouth, New Hampshire 03801 (US)
(74) Mandataire: Regimbeau
(86) Numéro de dépôt international: PCT/FR2013/051942
(87) Numéro de publication internationale: WO 2014/033390

(56) Documents cités:
- EP-A1- 2 006 074
- WO-A1-99/15323
- NL-C2- 1 003 167
- US-A1- 2006 231 981
- HOLMBERG J A ET AL: "MANUFACTURING AND PERFORMANCE OF RTM U-BEAMS", COMPOSITES, IPC BUSINESS PRESS LTD. HAYWARDS HEATH, GB, vol. 28A, no. 6, 1 janvier 1997 (1997-01-01), pages 513-521, XP000658862, ISSN: 0010-4361

## Description

### DOMAINE TECHNIQUE GENERAL

La présente invention concerne le domaine des procédés de fabrication de composants creux de turbomachine, et plus particulièrement la fabrication de préformes destinées à être assemblées et mises en place dans un outillage d'injection de composants creux d'une turbomachine

### ETAT DE L'ART

En raison de leur géométrie spécifique et de leurs tolérances, les composants creux utilisés dans des turbomachines sont complexes à réaliser.

De tels composants creux sont typiquement réalisés au moyen d'un procédé d'injection nécessitant conventionnellement l'utilisation de préformes disposées dans le moule d'injection, la réalisation de ces préformes conditionnant la qualité de la pièce finale ainsi obtenue. Cependant, la réalisation de telles préformes est complexe, et nécessite une pluralité d'étapes distinctes influant chacune sur la qualité finale de la pièce.

Le document EP 2 006 074 divulgue un outillage adapté au compactage, séchage et découpe d'une préforme d'un composant creux de turbomachine.

### PRESENTATION DE L'INVENTION

La présente invention vise à proposer un procédé de réalisation de préformes pour la réalisation de composants creux de turbomachine, assurant un positionnement et un dimensionnement précis tout en étant exploitable à l'échelle industrielle.

A cet effet, l'invention propose un procédé de mise en forme d'une préforme pour un composant creux de turbomachine, dans lequel
- on positionne une feuille en fibres tissées sur une base, ladite base étant munie d'une empreinte longitudinale,
- on positionne un mandrin dans ladite empreinte longitudinale, de manière à enserrer ladite feuille entre la base et le mandrin, le mandrin ayant une épaisseur croissante entre une extrémité proximale et une extrémité distale, et présentant deux flancs longitudinaux sensiblement perpendiculaires à la base,
- on verrouille en position l'extrémité distale du mandrin,
- on place un bloc proximal en appui sur la base, de manière à recouvrir l'extrémité proximale du mandrin, et on verrouille ledit bloc proximal,
- on met en forme deux volets de la feuille autour des flancs du mandrin,
- on positionne deux blocs latéraux en appui sur la base de part et d'autre du mandrin, de manière à enserrer chaque volet entre un desdits blocs latéraux et un flanc du mandrin,
- on verrouille en position lesdits blocs latéraux,
- on réalise un séchage de l'ensemble ainsi formé, de manière à figer la forme de la feuille et ainsi former une préforme comprenant ainsi une base plane à partir de laquelle s'étendent perpendiculairement deux volets,
- on ajuste les volets aux dimensions du mandrin, en découpant l'excédent de matière.

En variante, ledit procédé présente une ou plusieurs des caractéristiques suivantes, prises indépendamment ou en combinaison :
- l'ajustement des volets aux dimensions du mandrin est réalisé en positionnant une cale martyre en vis-à-vis des bordures du mandrin,
- les verrouillages en position sont réalisés au moyen de pinces ou de vis de serrage,
- ladite feuille est en fibres de carbone tressées, et ladite préforme est adaptée pour la réalisation d'une plateforme d'aube de turbomachine.

L'invention concerne également un procédé dans lequel
- on réalise deux étapes de formation de préformes au moyen du procédé tel que défini précédemment de manière à réaliser une première préforme ayant une forme de U et une seconde préforme ayant une forme de TT,
- on associe les deux préformes ainsi réalisées, en insérant la première préforme en forme de U entre les deux volets de la seconde préforme en forme de TT, de sorte que les bases desdites deux préformes soient opposées, et séparées par leurs volets respectifs,
- on dispose l'assemblage ainsi formé dans un outillage d'injection.

L'invention concerne en outre un outillage pour le compactage, le séchage et la découpe d'une préforme de composant creux de turbomachine, caractérisé en ce qu'il comprend :
- une base adaptée pour servir de support à une feuille de matériau, et comprenant une empreinte longitudinale,
- un mandrin adapté pour être positionné dans ladite empreinte longitudinale, de manière à enserrer une feuille de matériau contre la base, et définissant ainsi deux volets de ladite feuille disposés de part et d'autre du mandrin, ledit mandrin ayant une épaisseur croissante entre une extrémité proximale et une extrémité distale, et présentant deux flancs longitudinaux sensiblement perpendiculaires à la base
- deux blocs latéraux, adaptés pour être positionnés en appui sur la base de part et d'autre du mandrin de manière à enserrer les volets de la feuille contre le mandrin,
   lesdits blocs latéraux et/ou le mandrin étant adaptés pour coopérer avec des moyens de découpe desdits volets de manière à les ajuster aux dimensions du mandrin ou desdits blocs latéraux, ledit outillage comprenant en outre un bloc proximal, adapté pour être positionné en appui contre une extrémité du mandrin, et réaliser son verrouillage contre la base.

En variante, ledit outillage présente une ou plusieurs des caractéristiques suivantes, prises indépendamment ou en combinaison :
- lesdits blocs latéraux et/ou le mandrin comprennent des logements adaptés pour recevoir une cale martyre afin d'absorber les dépassements lors de l'ajustement des volets aux dimensions du mandrin ou desdits blocs latéraux,
- la base, le mandrin, les blocs latéraux et le cas échéant le bloc proximal sont réalisés en résine, en matière thermoplastique, en aluminium ou en acier.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 présente une vue d'une feuille de matériau disposée sur la base d'un outillage selon un aspect de l'invention ;
- La figure 2 présente une vue de côté d'un mandrin d'un outillage selon un aspect de l'invention,
- La figure 3 présente une vue en coupe de l'association de la base, de la feuille et du mandrin présentés précédemment,
- La figure 4 présente une vue de l'assemblage présenté sur la figure 3, auquel on ajoute des éléments additionnels de l'outillage selon un aspect de l'invention,
- La figure 5 présente une vue détaillée de verrouillage en position du mandrin,
- La figure 6 présente une vue en coupe de l'assemblage ainsi formé,
- La figure 7 présente une vue détaillée d'une zone de la figure 6,
- La figure 8 présente un exemple de préforme obtenue au moyen de l'outillage présenté précédemment,
- La figure 9 présente une autre variante d'outillage selon un aspect de l'invention,
- La figure 10 présente une vue détaillée d'une zone de l'outillage présenté sur la figure 9,
- La figure 11 présente une autre variante de préforme obtenue au moyen de cet outillage,
- La figure 12 présente un assemblage des deux préformes présentées précédemment,
- Les figures 13 et 14 présentent deux vues de cet assemblage positionné dans un moule d'injection selon un aspect de l'invention.

Sur l'ensemble des figures, les éléments en commun sont repérés par des références numériques identiques.

### DESCRIPTION DETAILLEE

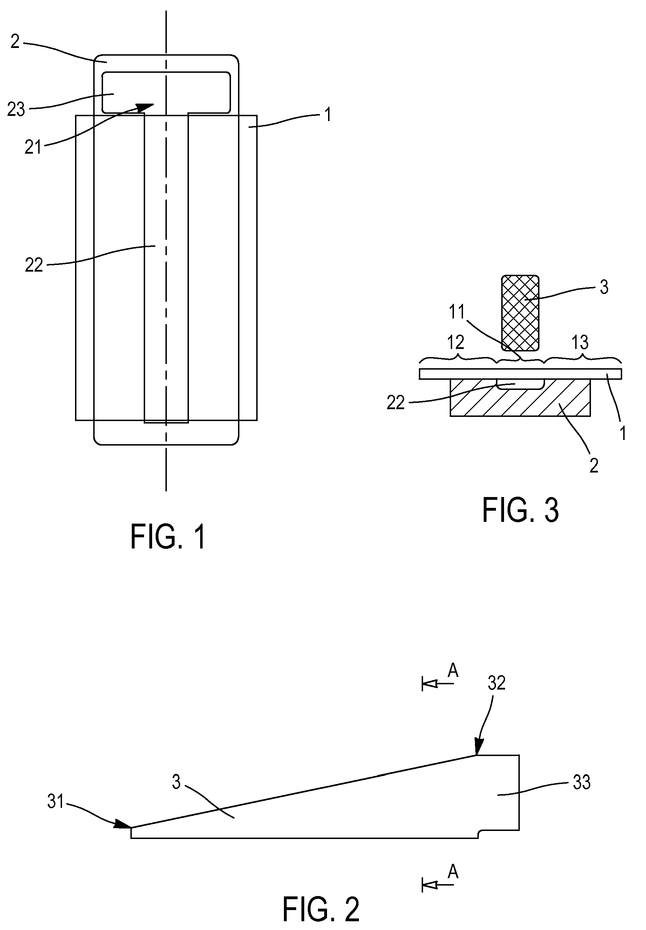

La figure 1 présente une feuille 1 de matériau positionnée sur une base 2 d'un outillage de mise en forme.

La feuille 1 est typiquement une feuille réalisée en fibres tissées 3D, typiquement des fibres de carbone.

La base 2 comprend une empreinte 21 en forme de T, présentant ainsi une empreinte longitudinale 22 et une empreinte transversale 23. La feuille 1 de matériau est disposée de manière à recouvrir l'empreinte longitudinale 22, ou plus précisément de manière à ce que la longueur de la feuille 1 soit disposée entre les deux extrémités de l'empreinte longitudinale 22.

La figure 2 présente une vue de côté d'un mandrin 3 adapté pour être associé à la base 2 présentée précédemment.
Le mandrin 3 a une forme générale de cale ; il présente une épaisseur croissante entre une extrémité proximale 31 et une extrémité distale 32, et présentant deux flancs longitudinaux sensiblement perpendiculaires à la base. Son extrémité distale 32 se prolonge par une section d'attache 33, typiquement parallélépipédique, adaptée pour venir en appui contre la base 2 et permettre le verrouillage en position du mandrin 3 sur la base 2.

La longueur entre l'extrémité proximale 31 et l'extrémité distale 32 du mandrin 3 est avantageusement égale à la longueur de l'empreinte longitudinale 22 de la base 2.

La figure 3 présente une vue en coupe selon un plan A-A représenté sur la figure 2 du mandrin 3 ainsi que de la base 2 et de la feuille 1 de matériau.
Le mandrin 3 est disposé de manière à venir s'insérer dans l'empreinte longitudinale 22 de la base 2, la section d'attache 33 du mandrin venant en appui contre la base 2 hors de l'empreinte longitudinale 22, dans le prolongement de son extrémité opposée à l'extrémité reliée à l'empreinte transversale 23.
En positionnant ainsi le mandrin 3 dans l'empreinte longitudinale 22 de la base 2, une portion 11 (indiquée sur la figure 3) de la feuille 1 de matériau est mise en forme de manière à se conformer à l'empreinte longitudinale 22 de la base 2, du fait de l'action du mandrin 3.
On définit ainsi deux volets 12 et 13, disposés de part et d'autre de cette portion 11, c'est-à-dire de part et d'autre du mandrin 3.

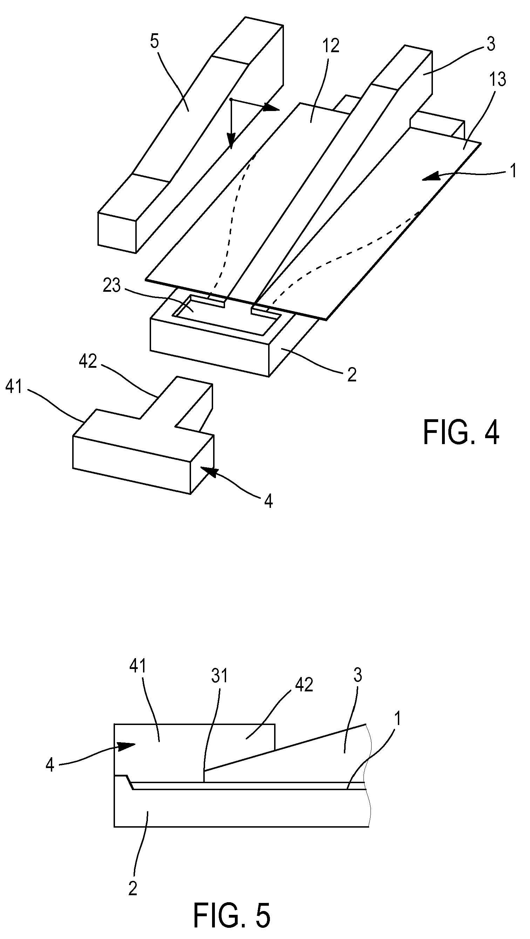

La figure 4 présente une vue de l'ensemble formé de la base 2, de la feuille 1 et du mandrin 3 auquel on vient associer un bloc proximal 4 ainsi que deux blocs latéraux 5 et 6 (seul le bloc latéral 5 est représenté sur cette figure).

Le bloc proximal 4 a une forme générale de T, et comprend une première section 41 adaptée pour s'insérer dans l'empreinte transversale 23 de la base 2, et une seconde section 42 adaptée pour venir en appui contre le mandrin 3 positionné sur la base 2.
La figure 5 illustre le positionnement relatif de la feuille 1, de la base 2, du mandrin 3 et du bloc proximal 4, la seconde section 42 du bloc proximal venant en appui contre la face supérieure du mandrin 3, de manière à ce que l'extrémité proximale 31 du mandrin 3 sont maintenue appuyée contre la base 2.

La figure 4 représente également le bloc latéral 5, qui est positionné sur la base 2, de manière à être en appui contre une face latérale du mandrin 3.
Le volet 12 correspondant est préalablement replié de manière à s'étendre le long de la face latérale du mandrin 3, sensiblement perpendiculairement à la base 2.
Ainsi, on enserre le volet 12 entre le mandrin 3 et le bloc latéral 5.

Le second bloc latéral 6 est disposé de manière similaire, de manière à être en appui contre l'autre face latérale du mandrin 3 et à enserrer l'autre volet 13 entre le mandrin 3 et le second bloc latéral 6.

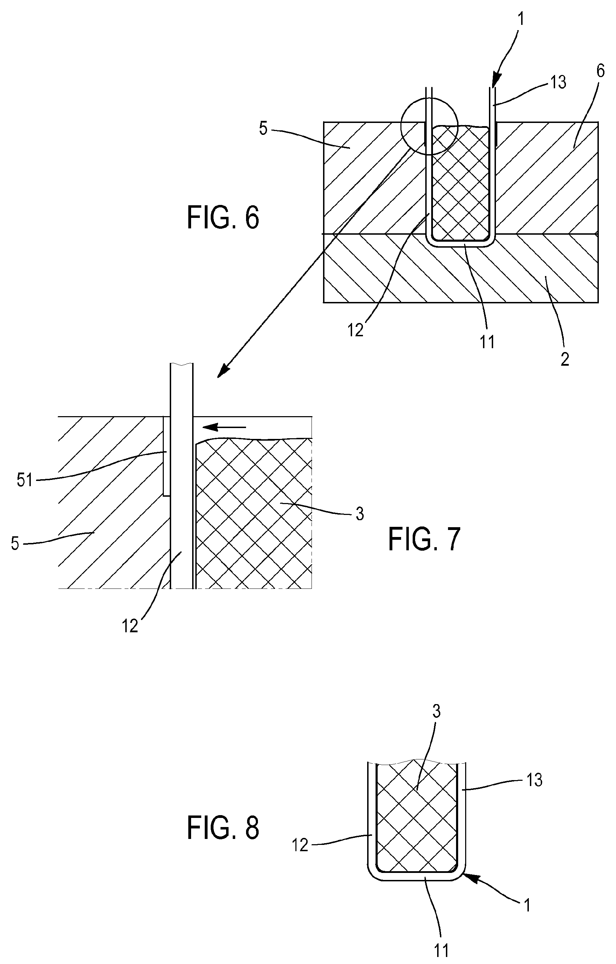

La figure 6 présente une vue en coupe transversale de l'assemblage ainsi formé. On voit la forme en U donnée à la feuille 1, dont les différentes parties sont enserrées entre la base 2, le mandrin 3 et les blocs latéraux 5 et 6.

La figure 7 présente une vue détaillée d'une partie repérée par un cercle sur la figure 6. On repère sur cette figure l'extrémité libre du volet 12, disposé entre le mandrin 3 et le bloc latéral 5.
Afin d'éviter des contraintes très importantes de positionnement de la feuille 1 sur la base 2, la feuille 1 est avantageusement dimensionnée de manière à être plus large que nécessaire, ce qui entraine un dépassement des volets 12 et 13 par rapport au mandrin 3 une fois la mise en forme de U réalisée, comme visible sur la figure 7.

Une fois la forme en U réalisée, on ajuste donc les deux volets 12 et 13 à la hauteur du mandrin 3, en coupant et en retirant la matière excédentaire.
Cette opération est typiquement réalisée alors que l'ensemble est dans la configuration présentée sur la figure 6. Une lame vient alors couper la matière excédentaire des volets 12 et 13, en longeant la bordure supérieure du mandrin 3.
A cet effet, les bords latéraux 5 et 6 comprennent avantageusement un logement adapté de manière à recevoir une cale martyre, c'est-à-dire une cale réalisée dans un matériau tendre, destinée à absorber les dépassements d'usinage lors de la découpe et ainsi éviter d'endommager les bords latéraux 5 et 6. La figure 7 représente ainsi une cale martyre 51 disposée dans un logement aménagé dans le bord latéral 5, à hauteur du bord supérieur du mandrin 3.
A l'inverse, on peut aménager des logements dans le mandrin 3 de manière à y disposer des cales martyres, et réaliser la découpe en suivant la bordure des blocs latéraux 5 et 6.

Ces moyens adaptés pour réaliser l'ajustement et la découpe des volets 12 et 13 directement dans l'outillage permettent d'obtenir une découpe précise, sans déformation de la préforme et sans enlèvement de fibre.

La figure 8 représente la feuille 1 mise en forme de U disposée autour du mandrin 3, après retrait des blocs latéraux 5 et 6, du bloc proximal 4 et de la base 2. La feuille 1 ainsi mise en forme a typiquement été séchée avant retrait de ces différents éléments, afin de la figer dans cette forme de U.

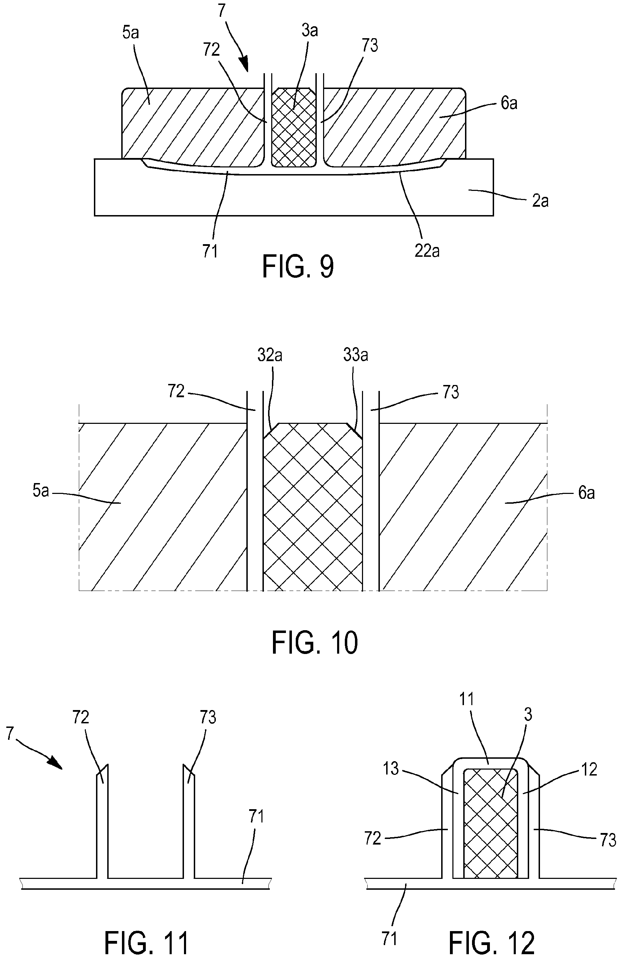

La figure 9 présente un assemblage similaire à celui présenté sur les figures précédentes, dans lequel on réalise une mise en forme de TT d'une feuille 7 de matériau. Les différents éléments sont repérés par les mêmes références numériques que précédemment, suivies de la lettre a.
La feuille 7 est typiquement une feuille réalisée en fibres tissées 3D, par exemple en fibres de carbone.
Les différentes étapes ainsi que les moyens utilisés sont similaires à ceux décrits en référence aux figures précédentes, à l'exception de l'empreinte 22a dans la base 2a qui est adaptée de manière à former une portion 71 plus large que la portion 11 formée précédemment.
En outre, la feuille 7 telle que positionnée initialement dans la base 2a est formée de plusieurs feuillets qui sont mis en position sur base 2a. Le mandrin 3a est ensuite positionné entre deux volets 72 et 73, selon l'axe longitudinal de la feuille 7. Le bloc proximal (non représenté) et les blocs latéraux 5a et 6a sont ensuite positionnés de manière à former une portion 71 large en appui sur la base 2a, à partir de laquelle s'étendent deux volets 72 et 73, de manière sensiblement perpendiculaire à la portion 71, ces deux volets 72 et 73 s'étendant de part et d'autre de l'axe longitudinal de la portion 71 et étant enserrés entre le mandrin 3a et respectivement le volet latéral 72 et le volet latéral 73.

La figure 10 présente une vue détaillée de la figure 9 mettant en avant l'ajustement des volets 72 et 73 à la hauteur du mandrin 3a.
Tout comme précédemment, les volets 72 et 73 tels que positionnés sur la base 2a initialement sont surdimensionnés, de manière à éviter les contraintes liées à un positionnement extrêmement précis d'une feuille qui serait déjà dimensionnée avant sa mise en forme.
Comme précédemment, on ajuste les deux volets 72 et 73 de la feuille 7 en retirant la matière excédentaire, par exemple au moyen d'un outil de coupe longeant les bordures supérieures du mandrin 3a.
Comme décrit précédemment en référence à la figure 7, on peut utiliser une cale martyre pour la réalisation de la découpe.
Comme précédemment, on peut également inverser la réalisation de la découpe, en la réalisant en longeant les bordures des blocs latéraux 5a et 6a, le mandrin 3a comprenant alors avantageusement un ou plusieurs logements pour recevoir des cales martyres.

Dans le mode de réalisation représenté sur la figure 10, le mandrin 3a présente des bords latéraux 32a et 33a biseautés, ce qui permet de servir de guide pour une lame de découpe par exemple.

La figure 11 présente une vue de la feuille 7 mise en forme de TT, une fois retirés les blocs latéraux 5a et 6a, le bloc proximal 4a, le mandrin 3a et la base 2a. La feuille 7 ainsi mise en forme a typiquement été séchée avant retrait de ces différents éléments, afin de la figer dans cette forme de TT.

Les figures 1 à 11 présentent ainsi un outillage et les différentes étapes associées pour la réalisation de deux demi-préformes typiquement réalisées en fibre tissées 3D, par exemple des fibres de carbone.

L'outillage décrit précédemment pour la réalisation de ces deux préformes permet de réaliser dans un même outillage les opérations de mise en forme, de compactage, de séchage et de découpe pour une préforme donnée, assurant ainsi une mise en forme précise de ces préformes.

La figure 12 présente l'assemblage des préformes ainsi formées à partir des deux feuilles 1 et 7 mises en forme précédemment, et illustrées sur les figures 8 et 11 respectivement.
Comme représenté sur cette figure, les préformes réalisées précédemment sont assemblées, la feuille 1 mise en forme de U étant insérée entre les volets 72 et 73 de la feuille 7 mise en forme de TT, de sorte que leurs deux portions 11 et 71 soient opposées, et séparées par leurs volets latéraux 12, 13, 72 et 73, et que le mandrin 3 utilisé pour la mise en forme de U de la feuille 1 soit également disposé entre ces deux portions 11 et 71.

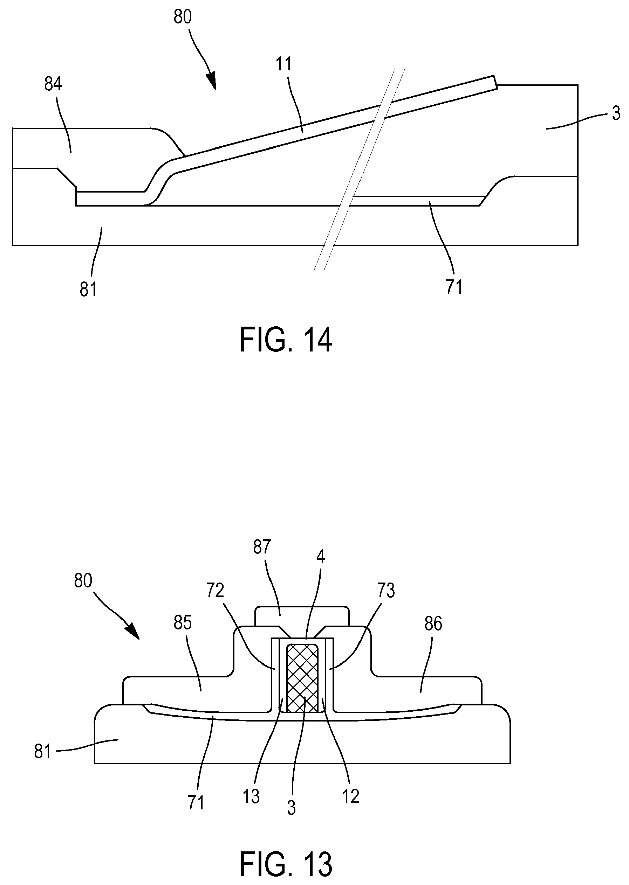

Les figures 13 et 14 présentent des vues en coupe illustrant le positionnement de l'assemblage ainsi formé dans un outillage 80, typiquement un outillage d'injection.

L'outillage 80 comprend une base 81 adaptée pour servir de support à la portion 71 de la feuille mise en forme de TT, un bloc de verrouillage proximal 84, des blocs latéraux 85 et 86, et un bloc supérieur 87

Ces différents éléments sont verrouillés en position, de manière à enserrer l'assemblage des feuilles mises en forme 1 et 7 et ainsi former un moule d'injection, permettant de former un composant creux de turbomachine, par exemple une plateforme aube d'une turbomachine.

Les différents éléments d'outillage présentés, notamment les bases 2, 2a et 81, les mandrins 3 et 3a, les blocs proximaux 4, 4a et 84, les blocs latéraux 5, 5a, 6, 6a, 85 et 86, et le bloc supérieur 87 sont typiquement réalisés en résine ou en matière thermoplastique dans le cas où ils sont réalisés en prototypage rapide, ou en aluminium ou en acier.
Ces différents éléments d'outillage sont verrouillés en position typiquement au moyen de pinces ou de vis de serrage, le serrage étant réalisé en direction de la feuille 1 ou 7 de manière à l'enserrer entre différents éléments de l'outillage.

L'invention permet ainsi de réaliser un assemblage complexe de plusieurs préformes pour la réalisation d'un composant creux de turbomachine, lesdites préformes pouvant être placé directement dans un outillage d'injection.
L'invention trouve une application particulière pour la réalisation de la plateforme aube d'une turbomachine.

## Revendications

1. Procédé de mise en forme d'une préforme (1, 7) pour un composant creux de turbomachine, dans lequel,
- on positionne une feuille (1, 7) en fibres tissées sur une base (2, 2a), ladite base (2, 2a) étant munie d'une empreinte longitudinale (22, 22a),
- on positionne un mandrin (3, 3a) dans ladite empreinte longitudinale (22, 22a), de manière à enserrer la feuille (1, 7) entre la base (2, 2a) et le mandrin (3, 3a), le mandrin (3, 3a) ayant une épaisseur croissante entre une extrémité proximale (31) et une extrémité distale (32), et présentant deux flancs longitudinaux sensiblement perpendiculaires à la base (2, 2a),
- on verrouille en position l'extrémité distale (32) du mandrin (3, 3a),
- on place un bloc proximal (4, 4a) en appui sur la base (2, 2a), de manière à recouvrir l'extrémité proximale (31) du mandrin (3, 3a), et on verrouille ledit bloc proximal (4, 4a),
- on met en forme deux volets (12, 13, 72, 73) de la feuille (1, 7) autour des flancs du mandrin (3, 3a),
- on positionne deux blocs latéraux (5, 6, 5a, 6a) en appui sur la base (2, 2a) de part et d'autre du mandrin (3, 3a), de manière à enserrer chaque volet (12, 13, 72, 73) entre un desdits blocs latéraux (5, 6, 5a, 6a) et un flanc du mandrin (3, 3a),
- on verrouille en position lesdits blocs latéraux (5, 6, 5a, 6a),
- on réalise un séchage de l'ensemble ainsi formé, de manière à figer la forme de la feuille (1, 7) et ainsi former une préforme comprenant une base plane (11, 71) à partir de laquelle s'étendent perpendiculairement deux volets (12, 13, 72, 73),
- on ajuste les volets (12, 13, 72, 73) aux dimensions du mandrin (3, 3a), en découpant l'excédent de matière.

2. Procédé selon la revendication 1, dans lequel l'ajustement des volets (12, 13, 72, 73) aux dimensions du mandrin (3, 3a) est réalisé en positionnant une cale martyre (51) en vis-à-vis des bordures du mandrin (3, 3a).

3. Procédé selon l'une des revendications 1 ou 2, dans lequel les verrouillages en position sont réalisés au moyen de pinces ou de vis de serrage.

4. Procédé selon l'une des revendications 1 à 3, dans lequel ladite feuille (1, 7) est en fibres de carbone tressées, et dans lequel ladite préforme est adaptée pour la réalisation d'une plateforme d'aube de turbomachine.

5. Procédé d'assemblage de préformes dans lequel
- on réalise deux étapes de formation de préformes (1, 7) au moyen du procédé selon l'une des revendications 1 à 4 de manière à réaliser une première préforme (1) ayant une forme de U et une seconde préforme (7) ayant une forme de TT,
- on associe les deux préformes (1, 7) ainsi réalisées, en insérant la première préforme (1) en forme de U entre les deux volets (72, 73) de la seconde préforme (7) en forme de TT, de sorte que les bases (11, 71) desdites deux préformes (1, 7) soient opposées, et séparées par leurs volets respectifs (12, 13, 72, 73),
- on dispose l'assemblage ainsi formé dans un outillage d'injection.

6. Outillage (80) pour le compactage, le séchage et la découpe d'une préforme d'un composant creux de turbomachine, **caractérisé en ce qu'**il comprend :
- une base (2, 2a) adaptée pour servir de support à une feuille de matériau (1, 7), ladite base (2, 2a) comprenant une empreinte longitudinale (22, 22a),
- un mandrin (3, 3a) adapté pour être positionné dans ladite empreinte longitudinale (22, 22a), de manière à enserrer la feuille de matériau (1, 7) contre la base (2, 2a), et définissant ainsi deux volets (12, 13, 72, 73) de ladite feuille (1, 7) disposés de part et d'autre du mandrin (3, 3a), ledit mandrin (3, 3a) ayant une épaisseur croissante entre une extrémité proximale (31) et une extrémité distale (32), et présentant deux flancs longitudinaux sensiblement perpendiculaires à la base (2, 2a)
- deux blocs latéraux (5, 6, 5a, 6a), adaptés pour être positionnés en appui sur la base (2, 2a) de part et d'autre du mandrin (3, 3a) de manière à enserrer les volets (12, 13, 72, 73) de la feuille (1, 7) contre le mandrin (3, 3a),
lesdits blocs latéraux (5, 6, 5a, 6a) et/ou le mandrin (3, 3a) étant adaptés pour coopérer avec des moyens de découpe desdits volets (12, 13, 72, 73) de manière à les ajuster aux dimensions du mandrin (3, 3a) ou desdits blocs latéraux (5, 6, 5a, 6a), ledit outillage (80) comprenant en outre un bloc proximal (4, 4a), adapté pour être positionné en appui contre l'extrémité proximale (31) du mandrin (3, 3a), et réaliser son verrouillage contre la base (2, 2a).

7. Outillage (80) selon la revendication 6, dans lequel lesdits blocs latéraux (5, 6, 5a, 6a) et/ou le mandrin (3, 3a) comprennent des logements adaptés pour recevoir une cale martyre (51) afin d'absorber les dépassements lors de l'ajustement des volets (12, 13, 72, 73) aux dimensions du mandrin (3, 3a) ou desdits blocs latéraux (5, 6, 5a, 6a).

8. Outillage (80) selon l'une des revendications 6 à 7, dans lequel la base (2, 2a), le mandrin (3, 3a), les blocs latéraux (5, 6, 5a, 6a) et le cas échéant le bloc proximal (4, 4a) sont réalisés en résine, en matière thermoplastique, en aluminium ou en acier.

## Patentansprüche

1. Verfahren zum Formen eines Vorformlings (1, 7) für ein hohles Bauteil einer Turbomaschine, wobei
- man eine Lage (1, 7) aus gewebten Fasern auf einer Basis (2, 2a) positioniert, wobei die Basis (2, 2a) mit einem länglichen Abdruck (22, 22a) ausgestattet ist,
- man einen Dorn (3, 3a) in dem länglichen Abdruck (22, 22a) positioniert, um die Lage (1, 7) zwischen der Basis (2, 2a) und dem Dorn (3, 3a) zu spannen, wobei der Dorn (3, 3a) eine zwischen einem proximalen Ende (31) und einem distalen Ende (32) zunehmende Dicke hat und zwei zur Basis (2, 2a) etwa senkrechte Längsflanken aufweist,
- man das distale Ende (32) des Dorns (3, 3a) in Position verriegelt,
- man einen proximalen Block (4, 4a) in Abstützung auf der Basis (2, 2a) platziert, um das proximale Ende (31) des Dorns (3, 3a) zu bedecken, und man den proximalen Block (4, 4a) verriegelt,
- man zwei Flügel (12, 13, 72, 73) der Lage (1, 7) um Flanken des Dorns (3, 3a) formt,
- man zwei seitliche Blöcke (5, 6, 5a, 6a) in Abstützung auf der Basis (2, 2a) beiderseits des Dorns (3, 3a) positioniert, um jeden Flügel (12, 13, 72, 73) zwischen einem der seitlichen Blöcke (5, 6, 5a, 6a) und einer Flanke des Dorns (3, 3a) zu spannen,
- man die seitlichen Blöcke (5, 6, 5a, 6a) in Position verriegelt,
- man eine Trocknung der derart geformten Einheit durchführt, um die Form der Lage (1, 7) zu fixieren und dadurch einen Vorformling zu formen, der eine ebene Basis (11, 71) umfasst, ab der sich senkrecht zwei Flügel (12, 13, 72, 73) erstrecken,
- man die Flügel (12, 13, 72, 73) an die Abmessungen des Dorns (3, 3a) durch Abtrennen des überschüssigen Materials anpasst.

2. Verfahren nach Anspruch 1, wobei die Anpassung der Flügel (12, 13, 72, 73) an die Abmessungen des Dorns (3, 3a) durch Positionieren eines Schlagkeils (51) gegenüber den Rändern des Dorns (3, 3a) durchgeführt wird.

3. Verfahren nach einem der Ansprüche 1 oder 2, wobei die Verriegelungen in Position mittels Klemmen oder Spannschrauben durchgeführt werden.

4. Verfahren nach einem der Ansprüche 1 bis 3, wobei die Lage (1, 7) aus geflochtenen Karbonfasern ist und wobei der Vorformling für die Herstellung einer Schaufelplattform einer Turbomaschine geeignet ist.

5. Verbindungsverfahren von Vorformlingen, wobei:
- man zwei Formungsschritte von Vorformlingen (1, 7) mittels des Verfahrens nach einem der Ansprüche 1 bis 4 durchführt, um einen ersten Vorformling (1), der eine U-Form hat, und einen zweiten Vorformling (7), der eine TT-Form hat, herzustellen,
- man die zwei derart hergestellten Vorformlinge (1, 7) durch Einsetzen des ersten Vorformlings (1) in U-Form zwischen die zwei Flügel (72, 73) des zweiten Vorformlings (7) in TT-Form verbindet, so dass die Basen (11, 71) der zwei Vorformlinge (1, 7) gegenüber und durch ihre jeweiligen Flügel (12, 13, 72, 73) getrennt sind,
- man die derart geformte Verbindung in einem Injektionswerkzeug anordnet.

6. Werkzeug (80) für das Kompaktieren, das Trocknen und das Abtrennen eines Vorformlings eines hohles Bauteils einer Turbomaschine, **dadurch gekennzeichnet, dass** es umfasst:
- eine Basis (2, 2a), die ausgebildet ist, um einer Materiallage (1, 7) als Unterlage zu dienen, wobei die Basis (2, 2a) einen länglichen Abdruck (22, 22a) umfasst,
- einen Dorn (3, 3a), der ausgebildet ist, um in dem länglichen Abdruck (22, 22a) derart positioniert zu sein, um die Materiallage (1, 7) gegen die Basis (2, 2a) zu spannen und dadurch zwei Flügel (12, 13, 72, 73) der Lage (1, 7) zu definieren, die beiderseits des Dorns (3, 3a) angeordnet sind, wobei der Dorn (3, 3a) eine zwischen einem proximalen Ende (31) und einem distalen Ende (32) zunehmende Dicke hat und zwei zur Basis (2, 2a) etwa senkrechte Längsflanken aufweist,
- zwei seitliche Blöcke (5, 6, 5a, 6a), die ausgebildet sind, um in Abstützung auf der Basis (2, 2a) beiderseits des Dorns (3, 3a) positioniert zu sein, um die Flügel (12, 13, 72, 73) der Lage (1, 7) gegen den Dorn (3, 3a) zu spannen,
wobei die seitlichen Blöcke (5, 6, 5a, 6a) und/oder der Dorn (3, 3a) ausgebildet sind, um mit Trennmitteln der Flügel (12, 13, 72, 73) derart zusammenzuwirken, dass sie an die Abmessungen des Dorns (3, 3a) oder der seitlichen Blöcke (5, 6, 5a, 6a) angepasst werden, wobei das Werkzeug (80) ferner einen proximalen Block (4, 4a) umfasst, der ausgebildet ist, um in Abstützung gegen das proximale Ende (31) des Dorns (3, 3a) positioniert zu sein und seine Verriegelung gegen die Basis (2, 2a) durchzuführen.

7. Werkzeug (80) nach Anspruch 6, wobei die seitlichen Blöcke (5, 6, 5a, 6a) und/oder der Dorn (3, 3a) Aufnahmen umfassen, die ausgebildet sind, um einen Schlagkeil (51) zu empfangen, um Überstände bei der Anpassung der Flügel (12, 13, 72, 73) an die Abmessungen des Dorns (3, 3a) oder der seitlichen Blöcke (5, 6, 5a, 6a) aufzunehmen.

8. Werkzeug (80) nach einem der Ansprüche 6 bis 7, wobei die Basis (2, 2a), der Dorn (3, 3a), die seitlichen Blöcke (5, 6, 5a, 6a) und gegebenenfalls der proximale Block (4, 4a) aus Harz, aus thermoplastischem Material, aus Aluminium oder aus Stahl hergestellt sind.

## Claims

1. A method for forming a preform (1, 7) for a hollow turbomachine component, wherein,
- a sheet (1, 7) made of woven fibers is positioned on a base (2, 2a), said base (2, 2a) being equipped with a longitudinal impression (22, 22a),
- a mandrel (3, 3a) is positioned in said longitudinal impression (22, 22a) so as to clamp the sheet (1, 7) between the base (2, 2a) and the mandrel (3, 3a), the mandrel (3, 3a) having a thickness that increases between a proximal end (31) and a distal end (32), and having two longitudinal flanks substantially perpendicular to the base (2, 2a),
- the distal end (32) of the mandrel (3, 3a) is locked into position,
- a proximal block (4, 4a) is placed resting on the base (2, 2a), so as to cover the proximal end (31) of the mandrel (3, 3a), and said proximal block (4, 4a) is locked,
- two flaps (12, 13, 72, 73) of the sheet (1, 7) are formed around the flanks of the mandrel (3, 3a),
- two lateral blocks (5, 6, 5a, 6a) resting on the base (2, 2a) on either side of the mandrel (3, 3a) are positioned, so as to clamp each flap (12, 13, 72, 73) between said lateral blocks (5, 6, 5a, 6a) and one flank of the mandrel (3, 3a),
- said lateral blocks (5, 6, 5a, 6a) are locked into position,
- drying of the assembly thus formed is carried out, so as to fix the shape of the sheet (1, 7) and thus to form a preform including a flat base (11, 71), from which two flaps (12, 13, 72, 73) extend perpendicularly,
- the flaps (12, 13, 72, 73) are adjusted to the dimensions of the mandrel (3, 3a) by trimming the excess material.

2. The method according to claim 1, wherein the adjustment of the flaps (12, 13, 72, 73) to the dimensions of the mandrel (3, 3a) is accomplished by positioning a tapping block (51) opposite the edges of the mandrel (3, 3a).

3. The method according to one of claims 1 or 2, wherein locking into position is accomplished by means of collets or clamping screws.

4. The method according to one of claims 1 to 3, wherein said sheet (1, 7) is made of braided carbon fibers, and wherein said preform is adapted for producing a turbomachine vane platform.

5. A method for assembling preforms wherein
- two preform (1, 7) forming steps are accomplished by means of a method according to one of claims 1 to 4, so as to achieve a first preform (1) having a U shape and a second preform (7) having a TT shape,
- the two preforms (1, 7) thus produced are associated by inserting the first U-shaped preform (1) between the two flaps (72, 73) of the second TT-shaped preform (7), so that the bases (11, 71) of said two preforms (1, 7) are opposite and separated by their respective flaps (12, 13, 72, 73),
- the assembly thus formed is placed in injection tooling.

6. A tooling (80) for compacting, drying and trimming a preform of a hollow turbomachine component, **characterized in that** it includes:
- a base (2, 2a) adapted to serve as a support for a sheet of material (1, 7), said base (2, 2a) including a longitudinal impression (22, 22a),
- a mandrel (3, 3a) adapted to be positioned in said longitudinal impression (22, 22a) so as to clamp the sheet of material (1, 7) against the base (2, 2a) and thus defining two flaps (12, 13, 72, 73) of said sheet (1, 7) positioned on either side of the mandrel (3, 3a), said mandrel (3, 3a) having a thickness that increases between a proximal end (31) and a distal end (32) and having two longitudinal flanks substantially perpendicular to the base (2, 2a),
- two lateral blocks (5, 6, 5a, 6a) adapted to be positioned resting against the base (2, 2a) on either side of the mandrel (3, 3a) so as to clamp the flaps (12, 13, 72, 73) of the sheet (1, 7) against the mandrel (3, 3a),
said lateral blocks (5, 6, 5a, 6a) and/or the mandrel (3, 3a) being adapted to cooperate with means for trimming said flaps (12, 13, 72, 73) so as to adjust them to the dimensions of the mandrel (3, 3a) or said lateral blocks (5, 6, 5a, 6a), said tooling (80) also including a proximal block (4, 4a) adapted to be positioned resting against the proximal end (31) of the mandrel (3, 3a) and to accomplish its locking against the base (2, 2a).

7. The tooling (80) according to claim 6, wherein said lateral blocks (5, 6, 5a, 6a) and/or the mandrel (3, 3a) include recesses adapted to accommodate a tapping block (51) so as to absorb excess during adjustment of the flaps (12, 13, 72, 73) to the dimensions of the mandrel (3, 3a) or said lateral blocks (5, 6, 5a, 6a).

8. The tooling (80) according to one of claims 6 to 7, wherein the base (2, 2a), the mandrel (3, 3a), the lateral blocks (5, 6, 5a, 6a) and the proximal block (4, 4a), if any are made of resin, of thermoplastic, of aluminum or of steel.
